# DEMANDE DE BREVET EUROPEEN

(11) **EP 1 174 629 A1**
(43) Date de publication de la demande: **23.01.2002**
(21) Numéro de dépôt: 00870149.2
(22) Date de dépôt: 30.06.2000
(51) Int. Cl.: F16C 27/04

(54) **Dispositif d'étanchéité d'un "squeeze film" intégré dans un palier à roulement**

(71) Demandeur: Techspace Aero S.A., 4041 Herstal (BE)
(72) Inventeur: Bos, Mathieu, 3520 Zonhoven (BE); Ryhon, Sébastien, 4140 Sprimont (BE)
(74) Mandataire: Van Malderen, Joelle

(57) **Abrégé**

La présente invention se rapporte à un palier à roulement pour le maintien d'une structure mobile interne (2) à symétrie de révolution, en rotation à l'intérieur d'une structure externe (1), elle-même fixe ou mobile, ledit palier à roulement comprenant un ensemble de billes (3) et au moins une bague externe de roulement (4) assurant le contact mécanique entre lesdites billes (3) et ladite structure externe (1), ledit palier à roulement comprenant en outre un amortisseur à huile sous pression appelé "squeeze film", disposé au niveau de la surface annulaire de contact (5) entre ladite bague (4) et la structure externe (1), caractérisé en ce que les surfaces latérales circulaires de ladite bague externe (4) sont en contact avec des joints latéraux se présentant de préférence sous forme de rondelles (30,32) entre lesquelles ladite bague externe (4) est serrée.

## Description

### Objet de l'invention

La présente invention se rapporte à un dispositif d'étanchéité pour "squeeze film" ou amortisseur à huile sous pression intégré dans un palier à roulement.

L'invention concerne également le palier à roulement mettant en oeuvre le dispositif d'étanchéité.

### Arrière-plan technologique et état de la technique

Un palier à roulement, tel que par exemple dans un moteur d'avion, sert de lien entre un ou plusieurs éléments mobiles internes, de préférence à symétrie de révolution et tournant autour d'un axe, et une structure externe. La structure externe peut être elle-même soit fixe soit mobile. Cette structure possède également la symétrie de révolution par rapport à l'axe de rotation de 1' (les) élément(s) mobile(s). Elle peut par exemple avoir la forme d'un cône.

Le palier à roulement est essentiellement constitué de billes ou de rouleaux se déplaçant sur des voies de roulement solidaires ou réalisées par des bagues, de préférence une bague interne et une bague externe.

En fonctionnement, des efforts sont transmis de l'élément mobile vers la structure externe, en particulier par l'intermédiaire de la bague externe de roulement, qui est directement en contact avec la structure externe.

Afin d'amortir l'effet des efforts radiaux, il est connu de confiner un film d'huile entre la bague externe de roulement, qui travaille en frottement, et la pièce de structure externe. Ce film d'huile est communément appelé « squeeze film ».

L'huile présente à la surface de contact bague - structure externe est une huile sous pression, qui joue le rôle d'amortisseur.

La plupart des « squeeze films » connus sont étanchés au moyen de joints se présentant sous la forme de segments de type « piston ». Ces joints sont placés dans deux gorges annulaires usinées dans la bague à sa surface de contact avec la structure externe. Le film d'huile est dès lors plus particulièrement confiné dans l'espace délimité par ces deux gorges annulaires.

Dans le cas où le palier est situé à une extrémité d'un arbre de rotation et qu'il subit un effort axial, on dit que le palier de roulement est un palier de butée. Dans ce cas particulier, un problème supplémentaire provient du fait que ce type de palier doit être pourvu d'un système de centrage qui doit reprendre cet effort axial. Ceci est particulièrement important en cas de haut régime.

Dans ce but, il a été proposé selon l'état de la technique de disposer une cage métallique ou des tiges boulonnées qui servent de lien entre ladite bague externe à l'une de leurs extrémités et la partie externe qui est habituellement fixe à l'autre extrémité desdites tiges boulonnées.

Le problème principal est donc double : il réside dans l'étanchéité d'un tel dispositif et dans le centrage de celui-ci par rapport à l'effort axial.

Le document US-A-4 175 803, en particulier, décrit la technique du "squeeze film" constituant un amortisseur à huile sous pression, utilisé particulièrement dans les moteurs de type turbine à gaz.

Dans ces moteurs, on utilise deux paliers à roulement pour maintenir dans une structure fixe, à ses extrémités, l'arbre portant les aubes du compresseur et de la turbine basse pression.

De même, on utilise deux autres paliers à roulement pour maintenir en rotation autour de l'arbre précité, l'arbre portant les aubes du compresseur et de la turbine haute pression. Les paliers s'appuient l'un sur l'arbre précité, l'autre sur la structure fixe.

Ces quatre paliers à roulement sont des exemples du domaine d'application de la présente invention.

Les paliers sont soumis à des vibrations entraînées par certains déséquilibres. Lors de ces vibrations, le film hydraulique d'amortissement (appelé "squeeze film" en anglais) est "écrasé" en un point de l'espace annulaire qui existe entre la bague externe du roulement et la structure externe qui entoure cette bague.

Les vibrations entraînent ce "point d'écrasement" en un mouvement orbital (de précession) le long de l'espace annulaire.

La présence d'huile maintenue sous pression dans l'espace annulaire, grâce au mouvement orbital, a pour effet de créer un amortissement de la vibration.

En vue de réaliser un amortissement suffisant et stable, il est souhaitable de maintenir le "squeeze film" par un dispositif d'étanchéité.

La plupart des "squeeze films" proposés comportent des joints d'étanchéité du même type que les segments de piston des moteurs automobiles et ils agissent en partie au moins par une pression radiale, comme par exemple dans le document FR-A-2 517 772.

Ce type de joint présente divers inconvénients. Les joints dynamiques de type segment de piston doivent être usinés avec une grande précision. Ils sont donc chers. De plus, leur montage est délicat. Enfin, ils présentent une fuite d'huile non calibrée et donc un amortissement pas toujours parfaitement maîtrisé.

En outre, cette disposition requiert un certain espace pour l'installation de l'amortisseur à huile et surtout pour l'installation des tiges de centrage au voisinage de l'axe du moteur. En conséquence, cette disposition reste inadaptée pour les petites machines tournantes. De plus, ce type de structure est relativement compliqué à assembler.

### Buts de l'invention

La présente invention vise à fournir une solution qui permette de garantir une bonne étanchéité du film d'huile constituant le "squeeze film" dans l'espace annulaire délimité par les gorges usinées dans la bague externe et la surface de contact entre la bague externe et la structure externe.

La présente invention vise en outre à permettre, dans le cas particulier d'un palier de butée, d'assurer la rétention axiale de la bague externe par rapport à la structure externe.

La présente invention vise également à proposer une solution alternative qui ne nécessite pas la présence d'espace pour l'installation de tiges de centrage et qui présente une grande facilité de montage des diverses pièces du palier.

D'autres buts et avantages apparaîtront à la lecture de ce qui suit.

### Principaux éléments caractéristiques de l'invention

La présente invention se rapporte à un palier à roulement pour le maintien d'une structure mobile interne à symétrie de révolution, en rotation à l'intérieur d'une structure externe, elle-même fixe ou mobile, ledit palier à roulement comprenant un ensemble de billes et au moins une bague externe de roulement assurant le contact mécanique entre lesdites billes et ladite structure externe, ledit palier à roulement comprenant en outre un amortisseur à huile sous pression appelé "squeeze film", disposé au niveau de la surface annulaire de contact entre ladite bague 4 et la structure externe, caractérisé en ce que les surfaces latérales circulaires de ladite bague externe sont en contact avec des joints latéraux se présentant de préférence sous forme de rondelles entre lesquelles ladite bague externe est serrée.

Les joints latéraux peuvent présenter au moins une partie en carbone.

De préférence, les joints latéraux sont solidarisés à ladite bague externe du roulement à l'aide d'une série d'éléments de fixation anti-rotation.

Avantageusement, les joints latéraux sont soumis à une précontrainte.

Selon une première forme d'exécution, cette précontrainte est réalisée par serrage de ladite bague externe 4 à l'aide de ressorts de Smolley.

Selon une seconde forme d'exécution, cette précontrainte est réalisée par serrage de ladite bague externe à l'aide de rondelles de Belleville.

### Brève description des figures

La figure 1 représente une vue en coupe, selon un plan passant par l'axe de révolution, d'un palier à roulement muni d'un « squeeze film » selon l'état de la technique.

La figure 2 représente une vue en coupe, selon un plan passant par l'axe de révolution, d'un palier à roulement muni d'un « squeeze film » selon une première forme d'exécution de la présente invention.

La figure 3 représente une vue en coupe, selon un plan passant par l'axe de révolution, d'un palier à roulement muni d'un « squeeze film » selon une seconde forme d'exécution de la présente invention.

### Description d'une forme d'exécution suivant l'état de la technique

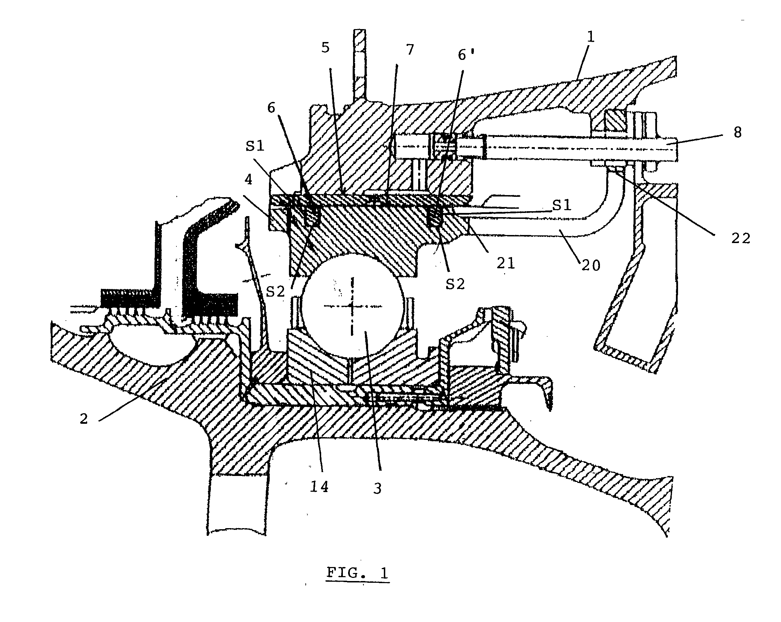

La figure 1 donne un exemple d'un palier à roulement utilisant un « squeeze film » selon l'état de la technique, dans le cas particulier d'un moteur aéronautique. Le palier assure le lien entre une structure fixe conique 1 disposée autour d'un élément mobile tournant 2, par exemple un arbre moteur dans ce cas-ci, au moyen d'un ou plusieurs roulements à billes 3. Le palier possède une symétrie de révolution autour de l'axe de l'arbre moteur. Le roulement est donc constitué d'un ensemble de billes 3 disposées de manière circulaire entre les deux bagues externe 4 et interne 14. Les billes 3 sont mises en contact avec la structure fixe 1 via la bague externe de roulement 4, la surface de contact 5 entre la bague externe 4 et la structure 1 étant annulaire. Deux gorges 6 et 6' sont usinées sur cette bague 4 aux extrémités de la surface de contact annulaire 5. Un joint circulaire de section essentiellement rectangulaire, de type segment de piston, est déposé dans chaque gorge. L'huile sous pression constituant le « squeeze film » est injectée au niveau de cette surface de contact 5, entre les deux gorges 6 et 6' au niveau d'un orifice 7 par une canalisation 8. La pression d'huile qui s'exerce sur le joint assure l'étanchéité par l'augmentation de la surface de contact entre le joint et deux surfaces perpendiculaires S1 et S2 des gorges, les forces de pression étant à la fois radiales et axiales.

Les joints d'étanchéité selon l'état de la technique doivent être dimensionnés sur mesure pour chaque application particulière. Ils nécessitent un ajustement mécanique et un montage très précis.

En outre, en vue d'assurer la rétention axiale de ladite bague externe de roulement 4 et d'assurer son centrage, on a prévu de disposer des tiges boulonnées 20 qui servent de lien entre ladite bague externe 4 à l'une de leurs extrémités 21 tandis que l'autre extrémité 22 est boulonnée à la partie externe fixe 1.

### Description d'une forme d'exécution préférée de l'invention

La présente invention vise à résoudre à la fois le problème de la bonne étanchéité du film d'huile de l'amortisseur ou "squeeze film" et la rétention axiale dans le cas d'un palier de butée.

Ceci est résolu de manière surprenante en proposant de disposer le long des deux surfaces latérales de la bague externe de roulement 4 deux joints latéraux 30 et 32 se présentant sous la forme de rondelles. Il s'agit donc essentiellement de deux plaques circulaires entre lesquelles ladite bague externe de roulement 4 est serrée.

Selon une forme d'exécution préférée, ces joints sont réalisés en carbone, le carbone présentant des caractéristiques avantageuses d'autolubrification.

Selon une autre forme d'exécution, ces rondelles peuvent être réalisées dans un matériau élastomère, éventuellement associé à une partie en carbone.

Le serrage est réalisé à l'aide d'une série d'éléments de fixation anti-rotation qui traversent lesdits joints latéraux 30 et 32 et les solidarisent aux deux surfaces latérales circulaires de la bague externe de roulement 4.

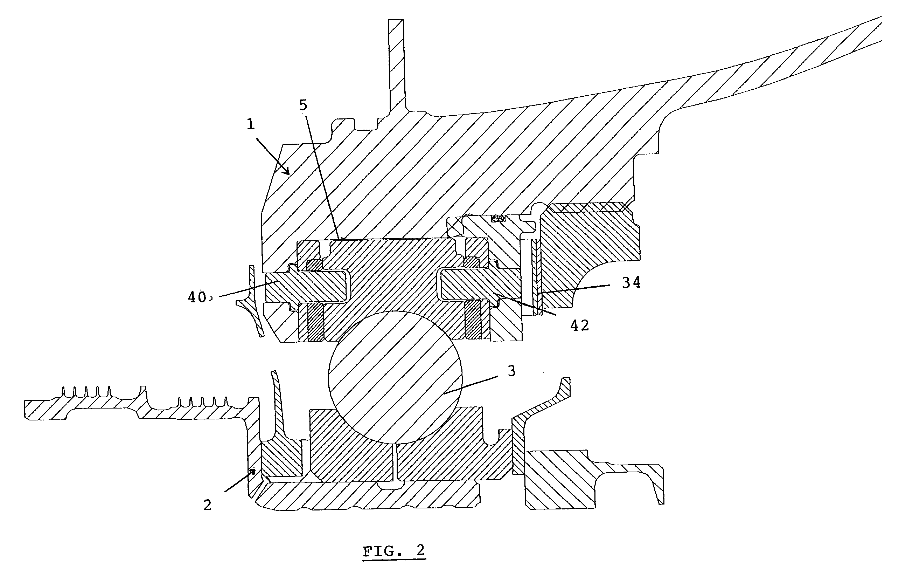

Selon une première forme d'exécution, il peut s'agir de deux séries d'éléments indépendants 40,42, chaque série étant adaptée de manière à solidariser un joint latéral sur une des deux faces latérales de la bague externe de roulement 4 comme représenté à la figure 2.

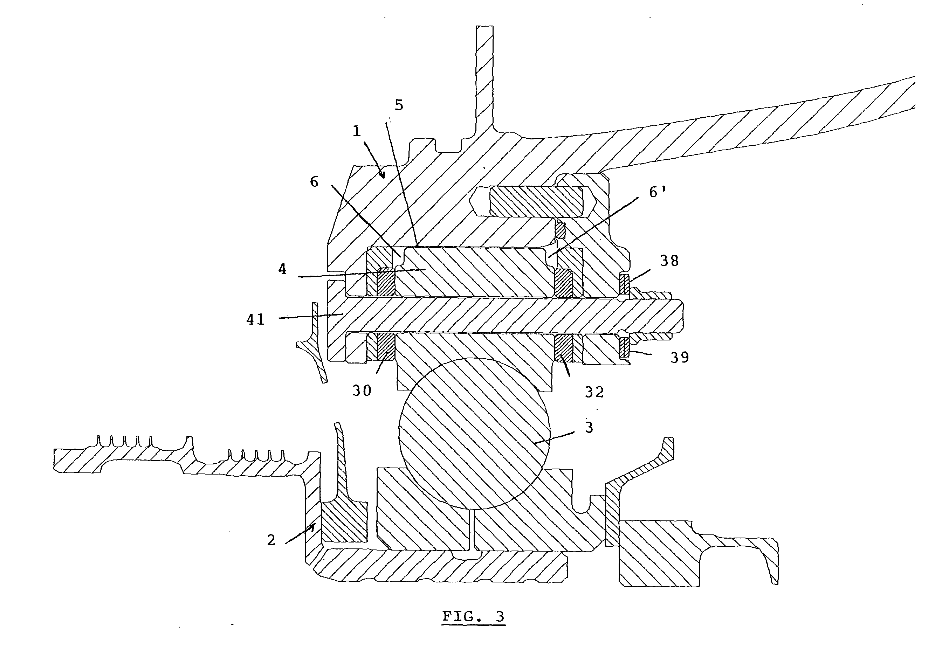

Selon une autre forme d'exécution, il s'agit d'une seule série de dispositifs de fixation 41 qui traversent de part en part ladite bague externe et qui serrent celle-ci entre les deux joints latéraux comme représenté à la figure 3.

Selon une caractéristique avantageuse de la présente invention, on peut soumettre lesdits joints latéraux à une précontrainte à l'aide desdits éléments de fixation. Dans ce but, on peut envisager d'apposer soit des ressorts de type Smollay 34 ainsi que représenté à la figure 2, soit des rondelles de Belleville 38 et 39, qui sont des plaques circulaires coniques comme représenté à la figure 3. Dans ce cas, en adaptant le serrage, on peut régler la raideur desdits ressorts ou desdites rondelles de Belleville et de ce fait la précontrainte subie par les rondelles 30 et 32 servant de joints latéraux.

Ceci permet de manière particulièrement avantageuse de régler l'effort de déclenchement, l'effort de déclenchement étant défini comme l'effort à partir duquel le mouvement relatif de précession de la bague externe de roulement par rapport à la structure fixe va s'initier. Dans le présent cas, il s'agit donc de l'effort nécessaire pour vaincre les forces de frottement desdites rondelles latérales 30 et 32 par rapport à la bague externe de roulement 4.

Le mouvement relatif de précession de ladite bague externe du roulement 4 par rapport à la structure fixe 1 est assuré au niveau de la surface de contact 5 qui reste lubrifiée.

En outre, la présence des rondelles latérales permet de maintenir une faible fuite d'huile le long de la surface latérale.

La présente invention permet de manière avantageuse de s'affranchir de l'utilisation d'une cage ou de tiges boulonnées, et donc de réduire le coût et l'encombrement de tels paliers.

En outre, la présente invention présente une facilité de montage tout en garantissant de bonnes propriété d'étanchéité du "squeeze film" de même qu'une bonne reproductibilité.

Le montage est avantageusement réalisé sans outillage par la simple dépose du roulement dans la structure appelée à le recevoir.

Le montage s'effectue comme suit :
- le roulement à billes 3, muni de sa bague externe 4 est enfilé dans la pièce de structure 1,
- on dispose ensuite les joints latéraux se présentant sous forme de rondelles (30, 32) le long des deux surfaces latérales de la bague externe 4, chaque joint latéral prenant en partie appui dans la gorge correspondante 6,6' formée par la mise en contact de la bague 4 avec la structure 1 ;
- on fixe chaque joint latéral 30,32 à l'aide des éléments de fixation anti-rotation 41 (figure 3) ou 40 et 42 (figure 2), l'élément 40 fixant le joint latéral 30 et l'élement 42 fixant le joint latéral 32 ;
- on positionne ensuite les éléments de serrage destinés à exercer une précontrainte au niveau des joints latéraux 30 et 32, c'est-à-dire de préférence soit un ressort de type Smolley 34 (figure 2) ou des rondelles de Belleville 38 et 39 (figure 3).

## Revendications

1. Palier à roulement pour le maintien d'une structure mobile interne (2) à symétrie de révolution, en rotation à l'intérieur d'une structure externe (1), elle-même fixe ou mobile, ledit palier à roulement comprenant un ensemble de billes (3) et au moins une bague externe de roulement (4) assurant le contact mécanique entre lesdites billes (3) et ladite structure externe (1), ledit palier à roulement comprenant en outre un amortisseur à huile sous pression appelé "squeeze film", disposé au niveau de la surface annulaire de contact (5) entre ladite bague (4) et la structure externe (1), **caractérisé en ce que** les surfaces latérales circulaires de ladite bague externe (4) sont en contact avec des joints latéraux se présentant de préférence sous forme de rondelles (30,32) entre lesquelles ladite bague externe (4) est serrée.

2. Palier à roulement selon la revendication 1, **caractérisé en ce que** les joints latéraux (30, 32) présentent au moins une partie en carbone.

3. Palier à roulement selon l'une quelconque des revendications précédentes, **caractérisé en ce que** les joints latéraux (30, 32) sont solidarisés à ladite bague externe du roulement (4) à l'aide d'une série d'éléments de fixation anti-rotation.

4. Palier à roulement selon l'une quelconque des revendications précédentes, **caractérisé en ce que** les joints latéraux (30, 32) sont soumis à une précontrainte.

5. Palier à roulement selon la revendication 4, **caractérisé en ce que** la précontrainte est réalisée par serrage de ladite bague externe (4) à l'aide de ressorts de Smolley (34).

6. Palier à roulement selon la revendication 4, **caractérisé en ce que** la précontrainte est réalisée par serrage de ladite bague externe (4) à l'aide de rondelles de Belleville (38,39).
